# EUROPEAN PATENT APPLICATION

(11) **EP 3 744 556 A1**
(43) Date of publication of application: **02.12.2020**
(21) Application number: 19177430.6
(22) Date of filing: 29.05.2019
(51) Int. Cl.: B60L 3/04, B60L 53/68, B60L 53/66, B60L 53/62, B60L 3/00, B60L 53/14

(54) **ELECTRIC VEHICLE RE-CONNECTION METHOD**

(71) Applicant: ABB Schweiz AG, 5400 Baden (CH)
(72) Inventor: van-der-Heijden, Jim, 5615 LD Eindhoven (NL); Bech, Lars Peter, 3119 JA Schiedam (NL); Villanyi, Balazs, 2613 JW Delft (NL)
(74) Representative: Maiwald Patent- und Rechtsanwaltsgesellschaft mbH

(57) **Abstract**

The invention relates to a method for re-connecting an electric vehicle, EV, (2) to an Electric vehicle Supply Equipment, EVSE, (3) without intervention from a user by injecting a Proximity Pilot, PP, signal into a PP line (1) of the electric vehicle (2), whereby the PP line (1) is connected via a PP contact (8) of a charging connector (4) to the EVSE (3) comprising the steps of:
Applying a voltage of a voltage source (10) of the EVSE (3) to the PP contact (8) as PP signal by the EVSE (3) and, after a limited duration,
switching off the voltage from the PP contact (8) by the EVSE (3).

## Description

### Technical Field

The invention relates to a method an electric vehicle, whereby a, Proximity Pilot, PP, line of the electric vehicle is connected via a PP contact of a charging connector to an Electric Vehicle Supply Equipment, EVSE. The invention further relates to an arrangement comprising an Electric Vehicle Supply Equipment, EVSE, comprising a charging connector comprising a Proximity Pilot, PP, contact and an electric vehicle comprising a PP line, whereby the PP contact is connected to the PP line.

### Background Art

Electric vehicle, EV, direct current, DC, fast charging using Combined Charging System, CCS, charging protocol according to IEC61851-23 and SAE J1772 standards uses a so-called Proximity Pilot, PP, signal to indicate the electric vehicle that a charging cable connecting the EV with a charger, such as an Electric Vehicle Supply Equipment, EVSE, is connected to the electric vehicle. Many electric vehicle manufacturers implement a Battery Management System, BMS, managing a battery of the electric vehicle in such a way that a charging cable re-connect, i.e. manual disconnect and connect of the charging cable with the electric vehicle again, is required to recover from any error that has occurred during a charging session.

However, for a user of the electric vehicle who expects to find a fully charged electric vehicle in the morning it is very inconvenient if the electric vehicle is not sufficiently charged in case an error occurred during the night. In such situation a charge connector needs to be manually re-connected e.g. by re-plugging the charge connector into the electric vehicle such that charging can continue. As such error is typically determined in the morning while having occurred shortly after having connected the electric vehicle to the charger or during the night, it may happen that the electric vehicle is not charged at all and thus cannot used by the user in the morning.

### Summary of invention

It is therefore an object of the invention to provide a method and a respective charging arrangement ensuring that charging continues even if an error occurred during a charging session.

The object of the invention is solved by the features of the independent claims. Preferred embodiments are detailed in the dependent claims.

Thus, the object is solved by a method for injecting a Proximity Pilot, PP, signal into a PP line of an electric vehicle, whereby the PP line is connected via a PP contact of a charging connector to an Electric Vehicle Supply Equipment, EVSE, comprising the steps of:
Applying a voltage of a voltage source of the EVSE to the PP contact as PP signal by the EVSE and, after a limited duration,
switching off the voltage from the PP contact by the EVSE.

It is therefore a key point of the invention that in case an error has occurred during a charging session a manual charging cable re-connect, i.e. disconnect and connect again of the charging cable, is not required to recover from the error. Such way it can be ensured that a user of the electric vehicle indeed finds a fully charged electric vehicle in morning, and not, in case such error has occurred, an otherwise partially or not even at all charged electric vehicle. In prior art systems, Battery Management System, BMS, managing a battery of the electric vehicle is often configured that in case a charging error has occurred charging is terminated. The proposed solution enables that the electric vehicle recognizes a "re-connect" for resuming a before interrupted charging sessions without the need for a manual re-connect of the physical charging cable, by basically "injecting" the PP signal onto the PP line.

According to IEC61851-23 and SAE J1772 standards, at least for Combined Charging System, CCS, type 2, CCS2, the PP contact, and therefore respectively the PP line, is not connected to the EVSE respectively a charger cabinet of the EVSE. In prior art systems, error handling in electric vehicles is arbitrary. Up until now almost all EVs need to see a manually performed re-connect of the charging cable, for clearing a charging error. Inside the charging connector, as per IEC61851-23 and SAE J1772 standards, there is a fixed resistor connected between the PP contact and a Protective Earth, PE, contact. For CCS type 2 the resistor has 1500 Ω. Presence of said resistor due to plugging the charging connector into a respective socket of the electric vehicle is detected by the electric vehicle via a voltage source and a series resistor by a detection logic. When the voltage drops below a certain value, the electric vehicle has detected that a charging connector was plugged into the socket of the electric vehicle. With the proposed solution, by connecting the PP contact to the EVSE respectively to a charger cabinet of the EVSE, the EVSE can connect a voltage source to the PP contact, thereby 'injecting' the PP signal onto the PP line such that the voltage of the PP line is raised above a threshold of the electric vehicle. Such way the proposed solution consists of the steps of applying the voltage to PP contact, waiting a certain amount of time i.e. the limited duration and thereafter disconnecting the voltage source. Such way thee electric vehicle considered respectively detects a re-connect of the charging connector.

Electric vehicle fast charging systems often use the so-called Combined Charging System, CCS, protocol according to IEC 61851-23 and SAE J1772 standard for charging electric vehicles both in the US and in the European Union, EU. The Combined Charging System, CCS, protocol is a fast charging method for charging electric vehicles delivering high-voltage direct current via a charging connector derived from SAE J1772 standard (IEC Type 1) or IEC Type 2 connector. Automobile manufactures that support CCS include Jaguar, Volkswagen, General Motors, BMW, Daimler, Ford, FCA, Tesla and Hyundai. The CSS standard is controlled by the so called CharIN consortium. Besides other protocols such as, for example, CHAdeMO, as abbreviation of CHArge de Move, or GB/T, in particular according to 20234.3-2011 standard, can be used in connection with the proposed solution. The charging cable preferably comprises a control pilot conductor, CP, extending between the charging connector and the EVSE and configured for submitting a control pilot signal for exchanging information between the EVSE and the electric vehicle, a protective earth conductor, PE, extending between the charging connector respectively its PE contact and the EVSE, a positive DC conductor, DC+, extending between the charging connector and the charger and/or a negative DC conductor, DC-, extending between the charging connector and the charger. As charge currents increase these days, the charging cable can be liquid cooled, as high-power charging requires DC+ and DC-conductors which can carry 500A current at a voltage of 1000V, or even more. The liquid cooling allows the DC+ and DC- conductors within the charging cable to become thinner, and thereby easier to use, because excessive heat due to high charge currents and charging cable internal resistances is taken care of. Control pilot signal and/or proximity pilot signal are preferably signalled as per SAE J1772 and/or IEC 61851 standard. The electric vehicle can be provided as a motor car, a bus, a van, a truck, a tractor or any other electrically powered vehicle.

Electric vehicle supply equipment, EVSE, also referred to as electric vehicle, EV, charging station, electric recharging point, charging point, charge point or electronic charging station, ECS, is an element in an infrastructure that supplies electric energy for recharging of electric vehicles, including electric cars, neighbourhood electric vehicles and plug-in hybrids. EVSEs provide a range of heavy duty or special connectors that conform to the variety of standards. For applying the voltage, preferably for switching on the voltage, and for switching off the voltage of the voltage source the EVSE may comprise an electronic or mechanical switch connected between the voltage source and the charging connector. The voltage source is preferably provided as a DC voltage source in particular outputting a DC voltage of 5V DC. The voltage source may comprise a diode connected in-between the voltage source and the PP contact, whereby a cathode of the diode is connected to the PP contact. The PP line is preferably provided as a PP conductor.

According to a preferred implementation, the method comprises the step of:
Measuring a PP voltage at the PP contact before applying the voltage by the EVSE.
Such way before applying the voltage an actual PP voltage can be measured for ensuring that the later applied voltage matches and/or does not exceed the actual PP voltage. For US electric vehicles, the PP voltage applied by the voltage source via a series resistor to the PP line within the electric vehicle is defined as 5V DC, whereby European electric vehicles do not use a common standard. Rather, European electric vehicles use PP voltages such as 3V DC, 8V DC, 10V DC or other voltages. The measuring is preferably carried out by the voltage source and/or the EVSE. More particularly, the EVSE comprises a computerized control device configured for measuring the PP voltage. In particular, the PP voltage is measure at the PP contact and/or between the diode and the PP contact.

In a further preferred implementation, the method comprises the step of:
Programming a voltage level to be applied by the voltage source according to the measured PP voltage by the EVSE and/or by the electric vehicle.
While the PP voltage applied within the electric vehicle onto the PP line for detecting if a charging connector is plugged into a respective socket is not clearly defined for all electric vehicles and standard, providing a respective programmable voltage source is advantageous. Such way it is particularly advantageous to first measure the actual PP voltage for determining the voltage level to be applied by the EVSE, thereafter to program the voltage level to be applied by the EVSE and then to apply the such-wise programmed voltage to the PP contact for injecting the PP signal into the PP line. Preferably, the control device is configured for programming the voltage level of the voltage source. As the voltage should not be too high for avoiding that the detection logic within the electric vehicle, it is advantageous to first measuring the PP voltage, slowly increasing the PP voltage applied in incremental steps and checking, in particular by 'trial and error' if the electric vehicle was re-connected i.e. if the charging resumes. If the electric vehicle is not reconnected the PP voltage can be increased by another incremental. Such incremental can be, for example, 0,5V DC.

According to a preferred implementation, the method comprises the step of:
Disabling applying of the voltage during a charging session by the EVSE and/or by the electric vehicle.
During an active, error-free charging session applying the voltage may result in an error that may cause the electric vehicle to interrupt the charging session. The electric vehicle may interpret a wrongly applied voltage that the charging cable was pulled and/or as a defect locking system of the charging connector. Thus, for avoiding such error possibly resulting in a termination of an active charging session application of the voltage can be disabled, for example by the control device and/or via instruction exchange between the EVSE and the electric vehicle via the CP line and/or wirelessly. Such solution can be implemented in software and/or as hardware means.

In a further preferred implementation, the method comprises the step of:
during the limited duration, disallowing disconnecting the charge connector by the EVSE and/or by the electric vehicle.
Such measure ensures that the electric vehicle, for example the detection logic of the electric vehicle, does not interpret the voltage that the charging cable is actually physically disconnected such that the user may drive away the electric car from the EVSE. The detection can be configured to initiate injection of the PP signal in case an error occurs, for example by sending a respective request to the control device.

According to a preferred implementation the method comprises the step of:
Detecting the injected PP signal and resuming an interrupted charging session in response to the detection by the electric vehicle. Preferably, the electric vehicle comprises a computerized detection logic, which is connected to the voltage source of the electric vehicle and the PP line. If the detection logic has detected the PP signal, a possible error can be cleared and charging can be resumed, without the need for a physical re-connect of the charging connector.

In a further preferred implementation of the method the limited duration is one, two or three seconds. The limited duration preferably depends on the electric vehicle and typically lasts a few seconds. The limited duration could also be longer, for example five or ten seconds.

The object of the invention is further solved by an arrangement for injecting a Proximity Pilot, PP, signal into a PP line, comprising
an Electric Vehicle Supply Equipment, EVSE, comprising a voltage source and a charging connector comprising a PP contact, and
an electric vehicle comprising the PP line, whereby
the PP contact is connected to the PP line and
the voltage source is configured for applying a voltage to the PP contact as PP signal and, after a limited duration, for switching off the voltage from the PP contact.

The proposed arrangement allows resuming charging without the need for a physical re-connect of the charging cable, in particular if an error has occurred and/or detected by the electric vehicle.

In a preferred implementation of the arrangement the electric vehicle comprises a control device configured for controlling the voltage source to apply and to switch off the voltage to the PP contact.

According to a further preferred implementation of the arrangement the control device is configured to measuring a PP voltage at the PP contact before applying the voltage.

In another preferred implementation of the arrangement the voltage source is programmable for supplying different voltage levels and the control device is configured to program a voltage level to be applied by the voltage source according to the measured PP voltage.

According to a further preferred implementation of the arrangement the electric vehicle comprises a detection logic configured for detecting the injected PP signal and for resuming an interrupted charging session in response to the detection.

In another preferred implementation of the arrangement the EVSE and/or the electric vehicle is configured for disallowing during the limited duration disconnecting the charge connector.

According to a further preferred implementation of the arrangement the EVSE is configured for disabling applying of the voltage during a charging session.

In another preferred implementation of the arrangement the limited duration is one, two or three seconds.

Further embodiments and advantages of the arrangement are directly and unambiguously derived by the person skilled in the art from the method as described before.

### Brief description of drawings

These and other aspects of the invention will be apparent from and elucidated with reference to the embodiments described hereinafter.

In the drawings:
Fig. 1 shows an arrangement for injecting a Proximity Pilot, PP, signal into a PP line comprising an Electric Vehicle Supply Equipment, EVSE, and an electric vehicle according to a first preferred embodiment in a schematic view, and
Fig. 2 shows the arrangement according to Fig. 1 according to a second preferred embodiment in a schematic view.

### Description of embodiments

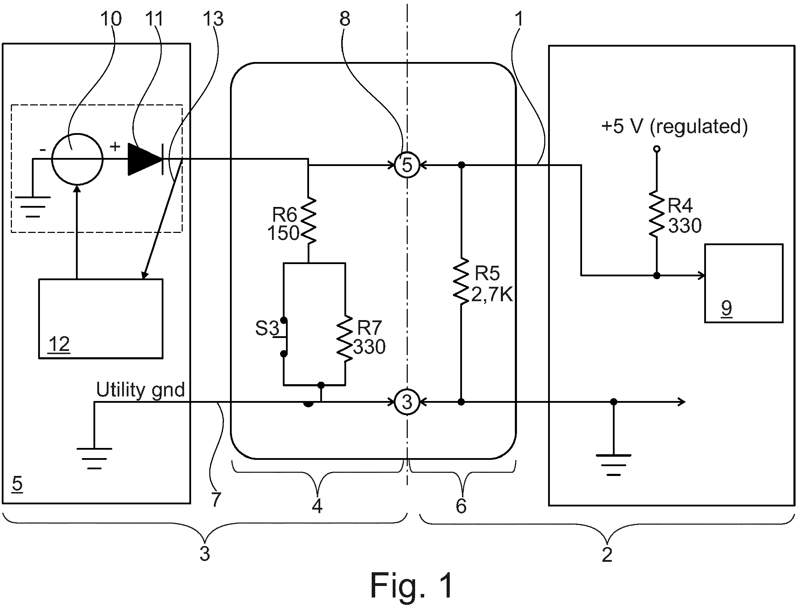

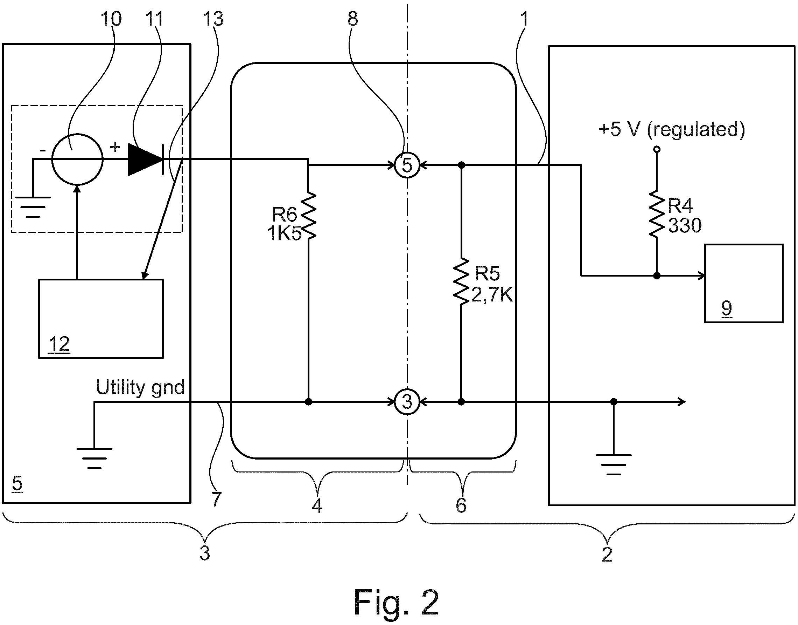

Fig. 1 shows an arrangement for injecting a Proximity Pilot, PP, signal into a PP line 1 of an electric vehicle 2 according to a first preferred embodiment in a schematic view, with a partial depiction of the electric vehicle 2. Fig. 2 shows the arrangement according to a second preferred embodiment in a schematic view.

The arrangement comprises the electric vehicle 2, depicted on the right side, and an Electric Vehicle Supply Equipment, EVSE, 3 depicted on the left side. The EVSE 3 is provided according to DIN EN 61851-23:2018-03 standard and thus configured for DC charging. The EVSE 3 comprises a charging connector 4, which is connected via a charging cable, only indicated, to a charger cabinet 5 of the EVSE 3. The only indicated charging cable comprises a positive direct current, DC, conductor and a negative DC conductor supplying electrical energy to the electric vehicle 2. Therefore, the EVSE 3 is connected via a not shown transformer and converter to an AC source such as an AC grid. The charging connector 4 is plugged into a socket 6 of the electric vehicle 2 such that an electrical connection is established between the EVSE 3 and the electric vehicle 2 vis the positive and negative DC conductors so that a battery of the electric vehicle 2 can be charged.

Besides the positive and negative DC conductors the charging cable respectively the charging connector 4 and the socket 6 comprise a protective earth, PE, conductor 7, which is connected to ground on EVSE 3 side as well as to a chassis ground of the electric vehicle 2. The PE conductor 7 is connected a PE contact, marked with a '3' in the figures, of the charging connector 4 respectively the socket 6. The electric vehicle 2 further comprises the PP line 1 respectively a PP conductor 1, which is connected via a PP contact 8 of the charging connector 4 to the EVSE 3.

The PP line 1 is fed on electric vehicle 2 side via a 330 Ω resistor with 5V DC, at least in the US, while in Europe other voltages such as 3V, 8V or 10V DC are also common. Within the socket 6 the PP line 1 and the PE conductor 7 are connected via a 2,7 kΩ resistor and within the charging connector 4 the PP contact 8 and the PE conductor 7 are connected via a 1,5 kΩ resistor in Fig. 1, showing a CCS type 1 implementation. In Fig. 2 a respective implementation is show for CCS type 2, wherein the resistor connecting the PP contact 8 and the PE conductor 7 has 1500 Ω. Such way, a detection logic 9 present in the electric vehicle 2 and connected to the PP line 1 can detect a connection of the charging connector 4 with the socket 6 by determining a voltage drop occurred due to the 1,5 kΩ resistor arranged within the charging connector 4.

In prior art arrangements, in case a charging error has occurred, a battery management system usually present in the electric vehicle 2 for managing charging of the battery interrupts charging. In such case charging can be resumed by manually disconnecting and subsequent re-connecting charging connector 4 and socket 6. For enabling such re-connect without physically disconnecting and subsequent re-connecting charging connector 4 and socket 6 the EVSE 3 comprises a DC voltage source 10, which is connected via a diode 11 to the PP contact 8. The EVSE 3 further comprises a computerized control device 12, which controls the voltage source 10 to apply and to switch off a voltage onto respectively from the PP contact 8, for such way a Proximity Pilot, PP, signal into the PP line 1.

In particular, the control device 12 controls the voltage source 10 to apply the voltage to the PP contact 8 as PP signal and, after a limited duration, to switch off the voltage from the PP contact 8. Due to the voltage, the detection logic 9 considers the charging connector 4 as being re-connected to the socket 6 such that a possible charging error can be cleared by the detection logic 9 in the battery management system so that charging resumes. Before applying the voltage onto the PP contact 8, the control device 12 measure via a voltage measurement device, indicated by arrow 13, an actual PP voltage of the PP contact 8. The voltage source 10 is provided programmable such that the voltage to be applied can be programmed by the control device 12.

A voltage level to be applied by the voltage source 10 is thus first programmed by the control device 12 in the voltage source 10 according to the measured PP voltage at the PP contact 9. Thereby, the voltage level may equal the measured PP voltage or may be 0,5V DC higher than the measured PP voltage. Said programmed voltage level is then applied by the voltage source 10 to the PP contact 8 for the limited duration. The limited duration may be one, two or three seconds or in general less than three seconds. The control device 12 checks thereafter if the charging session has been resumed. If the charging session has been resumed, nothing else is done. Otherwise the voltage level is again increased by 0,5V DC and again applied to the PP contact 8 until the charging session resumes.

With such iteration both Combined Charging System, CCS, charging protocols according to IEC61851-23 and SAE J1772 standards type 1 and type 2 can be supported. For CCS type 1 the PP voltage is fixed at 5V DC, while for CCS type 2 PP voltage and before described resistors are less well defined. Thus, by using said iteration i.e. by slowly increasing the voltage level CCS type 2 can be supported with the described solution as well. During an active charging session, applying of the voltage can be disabled by the control device 12 as a precautious measure. As a further precautious measure, disconnecting the charging connector 4 from the socket 6 during the limited duration can be disallowed by mechanical and/or electrical means, not depicted.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: Proximity Pilot, PP, line
- 2: electric vehicle
- 3: Electric Vehicle Supply Equipment, EVSE
- 4: charging connector
- 5: charger cabinet
- 6: socket
- 7: Protective Earth, PE, conductor
- 8: PP contact
- 9: detection logic
- 10: voltage source
- 11: diode
- 12: control device
- 13: arrow (PP voltage measurement by control device 12)

## Claims

1. Method for injecting a Proximity Pilot, PP, signal into a PP line (1) of an electric vehicle (2), whereby the PP line (1) is connected via a PP contact (8) of a charging connector (4) to an Electric vehicle Supply Equipment, EVSE, (3) comprising the steps of:
Applying a voltage of a voltage source (10) of the EVSE (3) to the PP contact (8) as PP signal by the EVSE (3) and, after a limited duration,
switching off the voltage from the PP contact (8) by the EVSE (3).

2. Method according to the previous claim, comprising the step of:
Measuring a PP voltage at the PP contact (8) before applying the voltage by the EVSE (3).

3. Method according to the previous claim, comprising the step of:
Programming a voltage level to be applied by the voltage source (10) according to the measured PP voltage by the EVSE (3) and/or by the electric vehicle (2).

4. Method according to any of the previous claims, comprising the step of:
Disabling applying of the voltage during a charging session of the electric vehicle (2) by the EVSE (3) and/or by the electric vehicle (2).

5. Method according to any of the previous claims, comprising the step of:
During the limited duration, disallowing disconnecting the charging connector (4) by the EVSE (3) and/or by the electric vehicle (2).

6. Method according to any of the previous claims, comprising the step of:
Detecting the injected PP signal and resuming an interrupted charging session in response to the detection by the electric vehicle (2).

7. Method according to any of the previous claims, whereby the limited duration is one, two or three seconds.

8. Arrangement for injecting a Proximity Pilot, PP, signal into a PP line (1), comprising
an Electric vehicle Supply Equipment, EVSE, (3) comprising a voltage source (10) and a charging connector (4) comprising a PP contact (8), and
an electric vehicle (2) comprising the PP line (1), whereby
the PP contact (8) is connected to the PP line (1) and
the voltage source (10) is configured for applying a voltage to the PP contact (8) as PP signal and, after a limited duration, for switching off the voltage from the PP contact (8).

9. Arrangement according to the previous arrangement claim, whereby the electric vehicle (2) comprises a control device (12) configured for controlling the voltage source (10) to apply and to switch off the voltage to respectively from the PP contact (8).

10. Arrangement according to the previous arrangement claims, whereby the control device (12) is configured to measuring a PP voltage at the PP contact (8) before applying the voltage.

11. Arrangement according to the previous arrangement claims, whereby the voltage source (10) is programmable for supplying different voltage levels and the control device (12) is configured to program a voltage level to be applied by the voltage source (10) according to the measured PP voltage.

12. Arrangement according to any of the previous arrangement claims, whereby the electric vehicle (2) comprises a detection logic (9) configured for detecting the injected PP signal and for resuming an interrupted charging session in response to the detection.

13. Arrangement according to any of the previous arrangement claims, whereby the EVSE (3) and/or the electric vehicle (2) is configured for disallowing during the limited duration disconnecting the charging connector (4).

14. Arrangement according to any of the previous arrangement claims, whereby the EVSE (3) is configured for disabling applying of the voltage during a charging session.

15. Arrangement according to any of the previous arrangement claims, whereby the limited duration is one, two or three seconds.
